# EUROPEAN PATENT APPLICATION

(11) **EP 4 488 094 A1**
(43) Date of publication of application: **08.01.2025**
(21) Application number: 24181642.0
(22) Date of filing: 12.06.2024
(51) Int. Cl.: B60K 17/28, B60K 1/00

(54) **AGRICULTURAL MACHINE WITH IMPROVED MOUNTING VOLUME**

(30) Priority: 05.07.2023 GB 202310333
(71) Applicant: AGCO International GmbH, 8212 Neuhausen am Rheinfall (CH)
(72) Inventor: HEINDL, Richard, 87616 Marktoberdorf (DE); BRENNINGER, Martin, 87616 Marktoberdorf (DE)
(74) Representative: AGCO Intellectual Property Department

(57) **Abstract**

An agricultural machine (1) includes a front axle (2), a rear axle (3), a power take-off (6) drivably connected with a first motor (7) and a coherent mounting volume (13). The coherent mounting volume (13) extends axially at least partly between the front axle (2) and the rear axle (3). The rear axle (3) includes a differential (19). The differential (19) is covered by the coherent mounting volume (13) and the first motor (7) is located out of the coherent mounting volume (13).

## Description

### FIELD

The present disclosure relates generally to an agricultural machine with an improved mounting volume for electric components.

### BACKGROUND

Also in the agricultural sector, regulations regarding emissions of vehicles are getting more and more restricted. Manufacturers of agricultural machines try to comply with these restricted regulations by electrifying the drivetrain of the agricultural machines. Thus, electrical components such as electrical energy storages need to be integrated in the agricultural machines for providing an emission free electric drive system. But electrical energy storages for providing electric power to electric drives are often very bulky and therefore require a lot of mounting volume.

### BRIEF SUMMARY

The integration of additional electrical components into an agricultural machine may require a greater mounting volume. Thus, it is an objective to improve the mounting volume of an agricultural machine for integration of additional electric components so that the need of additional mounting volume can be reduced.

According to an aspect of the invention there is provided an agricultural machine comprising a front axle, a rear axle, a power take-off drivably connected with a first motor and a coherent mounting volume. The coherent mounting volume extends axially at least partly between the front axle and the rear axle. The rear axle comprises a differential. The differential is covered by the coherent mounting volume. The first motor is located out of the coherent mounting volume.

The agricultural machine may be of any type such as a tractor, a combine, a sprayer or any vehicle combination of a vehicle and an implement or a trailer. The power take-off may be a mechanical interface providing a torque, e. g. for driving an implement connected with the agricultural machine. The torque may be generated by the first motor and transferred to the power take-off. The first motor may be an electric motor. The mounting volume is a coherent mounting volume that may extend in longitudinal direction of the agricultural machine. The torque generated by the first motor may be transferred to the differential. For example, the first motor may comprise a first output for transferring a torque to the differential and a second output for transferring a torque to the power take-off. The first and the second output of the first motor may be oriented in opposite directions. The first and the second output may be part of the same output shaft of the first motor or of two different output shafts of the first motor. The differential may enable to rotate wheels connected to the rear axle at different speeds, e. g. when the agricultural machine is cornering. The coherent mounting volume may enclose the differential to cover it. The coherent mounting volume may extend from the differential in direction to the front axle. The coherent mounting volume may be spaced from the front axle. Alternatively, the coherent mounting volume may reach at least to the front axle to get in contact with the front axle in at least one contact point or may extend beyond the front axle. The more the volume of the coherent mounting volume is increased the more volume can be provided for components to be integrated in the coherent mounting volume.

Since the first motor is located out of the coherent mounting volume, the volume of the coherent mounting volume is not reduced by the volume of the first motor. Hence, a greater volume of the coherent mounting volume can be provided for other electric components such as bulky electrical energy storages or electrical energy converters such as fuel cells and storage tanks therefor, for example.

The power take-off may be located out of the coherent mounting volume.

The power take-off may be directly connected with the first motor by a shaft or indirectly by any type of transmission arranged between the power take-off and the first motor. Since the power take-off is located out of the coherent mounting volume, the volume of the coherent mounting volume is not reduced by the volume of the power take-off.

The coherent mounting volume may have the shape of a hexahedron.

A hexahedron is a polyhedron with six faces, i. e. a six-faced solid. The coherent mounting volume may extend along a carrier of the agricultural machine. The carrier may be a support structure for mounting components such as the front or the rear axle, the differential and/or electric components. Due to the shape of a hexahedron, the carrier of the agricultural machine may be at least partly covered by the coherent mounting volume.

The hexahedron may be a quadrilateral frustum or a rectangular cuboid.

A quadrilateral frustum is an apex-truncated square pyramid. A rectangular cuboid comprises three pairs of rectangles. I. e. the shape of the coherent mounting volume may be different and may be adapted according to the geometry of the agricultural machine.

The agricultural machine may comprise left wheels and right wheels. The coherent mounting volume may extend laterally to at least one of the left wheels or the right wheels.

The coherent mounting volume may extend laterally to one or more wheels of the agricultural machine and may get in contact with the at least one wheel in a contact point. Alternatively, the coherent mounting volume may extend laterally beyond the at least one wheel of the agricultural machine for providing a greater volume of the coherent mounting volume between the front and rear wheels of the agricultural machine. The more the volume of the coherent mounting volume is increased the more volume can be provided for components to be integrated in the coherent mounting volume.

The agricultural machine may comprise a cabin, wherein the coherent mounting volume may extend at least to the cabin.

Thus, the volume of the coherent mounting volume may be at least partly limited by the cabin any may get in contact with the cabin in at least one contact point.

The first motor and the power take-off may be located behind the coherent mounting volume at a rear side of the agricultural machine.

The carrier of the agricultural machine may extend beyond the rear axle or the differential so that the first motor may be mounted to the carrier of the agricultural machine. If the coherent mounting volume has the shape of a hexahedron, a rear face of the hexahedron may be oriented according to the rear side of the agricultural machine. So, the first motor and the power take-off may be located or mounted behind the rear face of the hexahedron.

The agricultural machine may comprise a clutch. The clutch may be located out of the coherent mounting volume and configured to interrupt a toque transfer from the first motor to the power take-off.

The clutch may be arranged between the first motor and the power take-off. Since the clutch is located out of the coherent mounting volume, the volume of the coherent mounting volume is not reduced by the volume of the clutch.

The coherent mounting volume may extend at least to the rear axle.

So, the coherent mounting volume may reach at least to the rear axle to get in contact with the rear axle in at least one contact point or may extend beyond the rear axle. The more the volume of the coherent mounting volume is increased the more volume can be provided for components to be integrated in the coherent mounting volume.

The agricultural machine may comprise an energy storage. The energy storage may be covered by the coherent mounting volume.

The energy storage may be connected to any electrical component to provide energy to the component, for example to the first motor or to a fuel cell for converting any energy source into electrical energy for the first motor. The coherent mounting volume may enclose the energy storage so that the energy storage is protected by other components covered by the coherent mounting volume against damage or any other external impacts. For example, the energy storage may be hidden or mounted behind the other components covered by the coherent mounting volume for providing a mechanical protection for the energy storage.

The agricultural machine may comprise a carrier. The carrier may be covered by the coherent mounting volume. The energy storage may be mounted to the carrier.

The carrier may be the same carrier as mentioned above. The carrier may have a T-shape, a H-shape or any other shape. For example, the carrier may be a two-part carrier comprising two U-shape carrier parts that are welded together. The carrier may comprise at least one hole for inserting and mounting the energy storage.

The energy storage may comprise at least one storage tank for storing a fluid.

The fluid may be any fluid such as hydrogen or methanol. The fluid may be provided to the fuel cell to convert the chemical energy of the fluid into electrical energy.

The energy storage may comprise a battery.

The battery may store electrical energy. The battery may be connected to the fuel cell to store electrical energy produced by the fuel cell. The battery may be connected to the first motor to provide electrical energy for driving the first motor.

The agricultural machine may comprise a transmission. The transmission may be covered by the coherent mounting volume. The transmission may be drivably connected with the first motor.

The transmission may be arranged between the first motor and the differential so that the torque of the first motor can be transferred to the differential via the transmission. The transmission may be of any type such as a planetary gearset, a continuous variable transmission (CVT), a hydrostatic transmission or any combination thereof.

The transmission may comprise a sun gear, a ring gear, and a planet carrier. The planet carrier may be drivably connected with the first motor.

The planet carrier holds at least one planet gear rotatably connected with the planet carrier. The at least one planet gear meshes with the sun gear and the ring gear. I. e. the transmission may be designed as a planetary gearset wherein a torque generated by the first motor is transferred to the planet carrier for driving it. Another part of the planetary gearset, as for example the sun gear or the ring gear, may be connected with the differential for transferring the torque to the differential and driving the wheels connected to the differential.

The transmission may comprise a hydraulic pump drivably connected with the ring gear.

Thus, the first motor may drive the hydraulic pump for delivering a hydraulic fluid such as oil. The oil may be provided to a hydraulic consumer.

The transmission may comprise a second motor hydraulically connected with the hydraulic pump. The differential may be drivably connected with the second motor.

The second motor may be a hydraulic motor driven by the hydraulic fluid delivered by the hydraulic pump. The second motor may generate a torque and transfer the torque to the differential for driving the wheels connected with the differential. Thus, the transmission may be a hydrostatic-mechanical power split transmission for transferring a torque to the differential wherein the torque is generated by the first motor, by the second motor or by both motors.

The differential may be drivably connected with the sun gear.

Thus, the differential may be mechanically driven by the first motor transferring a torque to the sun gear via the at least one plant gear rotatably connected with the planet carrier.

The agricultural machine may comprise a spur gear. The spur gear may be out of the coherent mounting volume. The first motor may be connected with an input shaft of the spur gear. The power take-off may be connected with an output shaft of the spur gear.

The spur gear may transform the rotational speed of the output of the first motor to a different rotational speed of the power take-off according to a gear ratio of the spur gear. The spur gear may be a switchable spur gear providing multiple gear ratios to switch between the different gear ratios. Since the spur gear is located out of the coherent mounting volume, the volume of the coherent mounting volume is not reduced by the volume of the spur gear.

The agricultural machine may comprise a control unit. The control unit may be covered by the coherent mounting volume. The control unit may be connected with the first motor.

The control unit may comprise an inverter and may control the torque or the rotational speed of the first motor. The control unit may be connected to other controllers or sensor units as for example a vehicle controller of the agricultural machine.

The agricultural machine may comprise a fuel cell. The fuel cell may be covered by the coherent mounting volume. The fuel cell may be connected with the first motor.

The fuel cell may be a hydrogen fuel cell or a methanol fuel cell. The fuel cell may provide electrical energy to the first motor to drive the first motor. The fuel cell may provide electrical energy to consumers other than the first motor such as the control unit.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural machine.
FIG. 2 illustrates a schematic representation of the agricultural machine in a first embodiment.
FIG. 3 illustrates a schematic representation of the agricultural machine in a second embodiment.
FIG. 4 illustrates a schematic representation of the agricultural machine in the first or second embodiment of the agricultural machine 1 comprising additional components.
FIG. 5 illustrates a sectional view of FIG. 4.
FIG. 6 illustrates a simplified view of a control unit of the agricultural machine.

### DETAILED DESCRIPTION

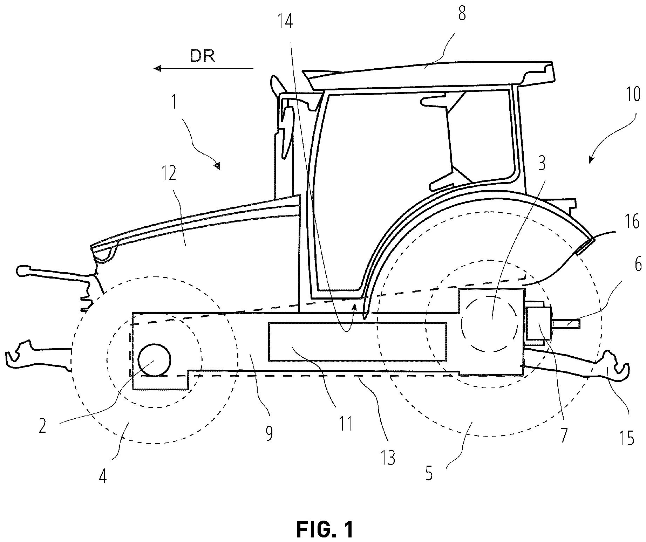

FIG. 1 illustrates an agricultural machine 1 (hereinafter referred to simply as a tractor) provided with wheels 4, 5 mounted to front and rear axles 2, 3 which are connected to a carrier 9. Alternatively, the agricultural machine 1 may be of any other type than a tractor as for example a combine, a forage harvester or a sprayer. The agricultural machine 1 has a cabin 8 and a bonnet 12 supported on the carrier 9. Whilst the agricultural machine 1 is illustrated with wheels 4, 5, the agricultural machine 1 can be adapted for use with tracks or other types of driven ground engaging members. In this regards, the term "axle" should be understood as encompassing any suitable arrangement for driving ground engaging members such as wheels or tracks on opposite sides of the agricultural machine 1 for moving it in a driving direction DR. At a rear side 10 of the agricultural machine 1, a first motor 7 is attached to the carrier 9. The first motor 7 is an electric motor. A power take-off (PTO) 6 is drivably connected with the first motor 7 for transferring a torque to any tools or implements that may be attached to a linkage 15 of the agricultural machine 1. An energy storage 11 is attached to the carrier 9. The energy storage 11 can provide electrical energy to the first motor 7 or any other consumer. Additionally, the energy storage 11 may provide chemical energy for example in terms of hydrogen for supplying other components such as a fuel cell.

The agricultural machine 1 provides a coherent mounting volume 13 extending axially at least partly between the front axle 2 and the rear axle 3. Thus, the coherent mounting volume 13 may get in contact with the front axle 2 and/or rear axle 3 or may go beyond the front axle 2 and/or the rear axle 3. As shown in FIG. 1, the coherent mounting volume 13 extends beyond the front axle 2 and the rear axle 3. Alternatively, the coherent mounting volume 13 may extend beyond only one of the axles 2 and 3.

Depending on the size of the coherent mounting volume 13, the coherent mounting volume 13 can cover a different number of components. As can be seen in FIG. 1, some components are covered by the coherent mounting volume 13 and some components are arranged outside of the coherent mounting volume 13. The first motor 7 and the power take-off 6 are attached to the agricultural machine 1 in such a way that both components are located out of the coherent mounting volume 13. More precisely, the first motor 7 and the power take-off 6 are located behind the coherent mounting volume 13 at the rear side 10 of the agricultural machine 1. The upper side of the coherent mounting volume 13 extends to the cabin 8 and gets in contact with a lower part of the cabin 8 at a contact point 14. The energy storage 11 is also covered by the coherent mounting volume 13.

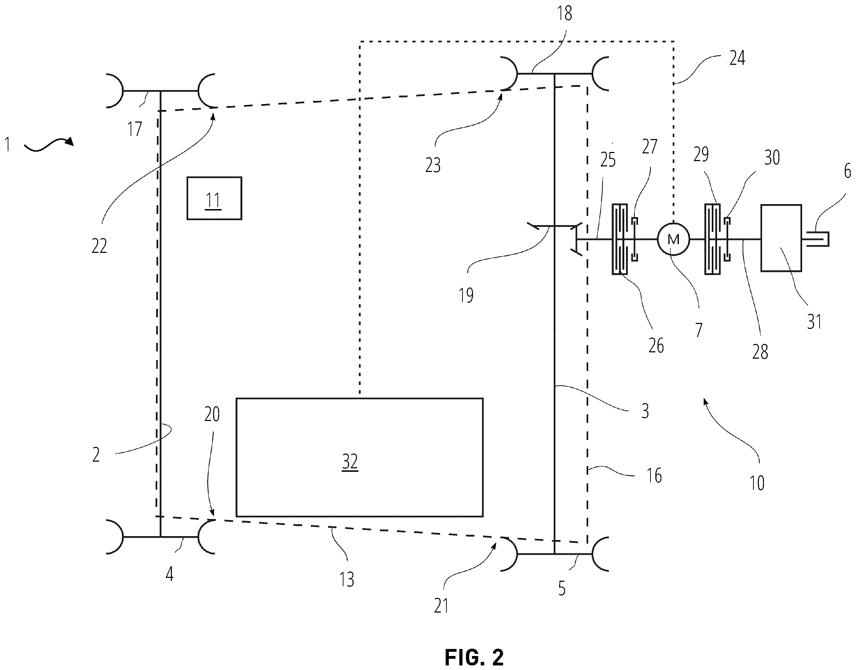

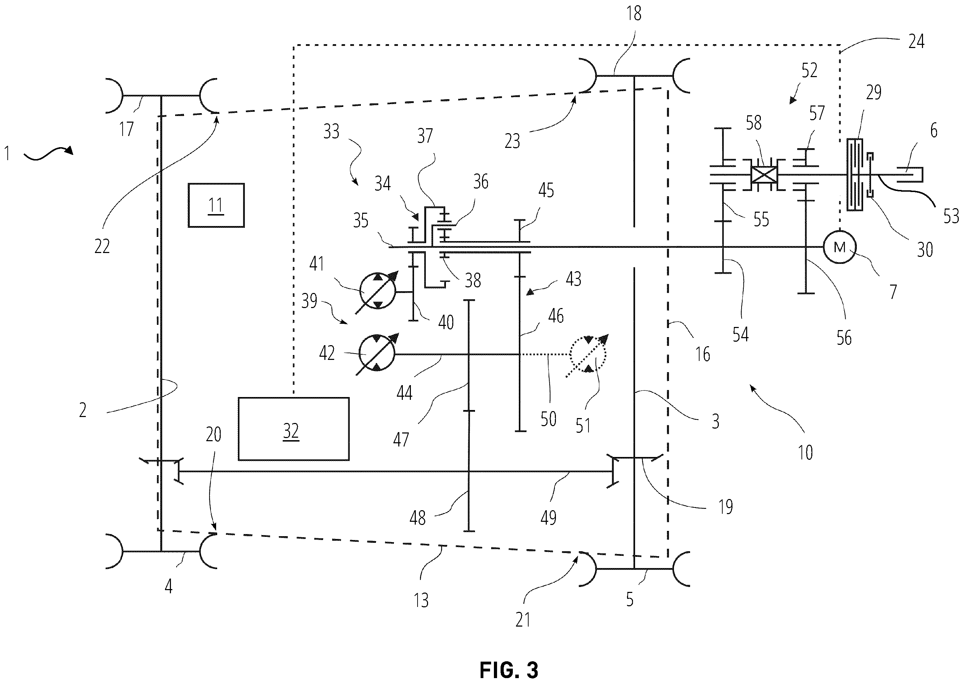

FIG. 2 shows a schematic representation of a first embodiment of the agricultural machine 1. FIG. 3 shows a schematic representation of a second embodiment of the agricultural machine 1. As can be seen in FIG. 2 and FIG. 3, the first and the second embodiment comprise partly the same design as explained in the following in more detail.

Opposite to the two left wheels 4 and 5, the agricultural machine 1 comprises two right wheels 17 and 18. Wheel 17 is connected with the front axle 2. Wheel 18 is connected with the rear axle 3. As can be seen in FIG. 2 and FIG. 3, the coherent mounting volume 13 extends laterally at least partly between the two left wheels 4 and 5 and the two right wheels 17 and 18 and contacts wheel 4 in a contact point 20, wheel 5 in a contact point 21, wheel 17 in a contact point 22 and wheel 18 in a contact point 23.

The rear axle 3 comprises a differential 19. The differential 19 is driveably connected with the first motor 7 so that a torque generated by the first motor 7 can be transferred to the differential 19. Thus, the first motor 7 can drive the rear axle 3 to move the agricultural machine 1 in the driving direction DR. A control unit 32 is connected via a line 24 with the first motor 7 for sending control signals to control the speed and/or the torque of the first motor 7. The control unit 32 may control the first motor 7 as a electric generator to generate electrical energy and to charge the energy storage 11. The differential 19 as well as the control unit 32 are covered by the coherent mounting volume 13.

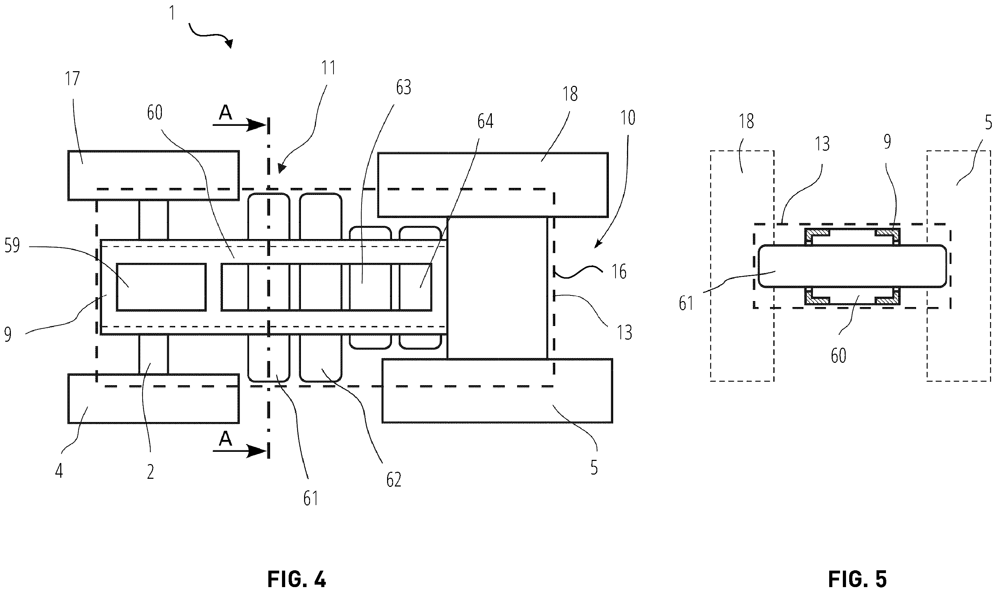

The coherent mounting volume may have the shape of a hexahedron. In geometry, a hexahedron is a polyhedron having six-faces. For example, a cube is a specific hexahedron whose faces are shaped as squares. Alternatively, the hexahedron may be shaped as a quadrilateral frustum, i. e. an apex-truncated square pyramid. In FIG. 1, the shape of the left and right side faces of the hexahedron can be seen from a side view. FIG. 2 and FIG. 3 show each the shape of a top face and a bottom face of the hexahedron. In FIG. 5, the shape of a front face and a rear face 16 of the hexahedron can be seen. Additionally, FIG. 1 to FIG. 3 show that the first motor 7 and the power take-off 6 are located behind the rear face 16 of the hexahedron (coherent mounting volume 13).

So far, the first and the second embodiment of the agricultural machine 1 have the same design. In the following, specific features of the first and the second embodiment of the agricultural machine 1 are described with reference of FIG. 2 and FIG. 3.

As can be seen in FIG. 2, the first embodiment of the agricultural machine 1 comprises a shaft 25 connecting the differential 19 with the first motor 7. Hence, a torque generated by the first motor 7 can be transferred to the differential 19 and distributed to the wheels 5 and 18 of the rear axle 3. The transfer of the torque via the shaft 25 can be interrupted by a clutch 26 arranged between the differential 19 and the first motor 7. In addition, a brake 27 is integrated between the differential 19 and the first motor 7 for decelerating the rotational speed of the rear axle 3 and braking the agricultural machine 1. Next to the differential 19, the first motor 7 is connected by a shaft 28 with the power take-off 6 to transfer a torque generated by the first motor 7 to the power take-off 6. The transfer of torque via the shaft 28 can be interrupted by a clutch 29 arranged between the first motor 7 and the power take-off 6. A brake 30 arranged between the first motor 7 and the power take-off 6 can decelerate the rotational speed of the shaft 28 and hold the shaft 28 at a specific position. The clutches 26, 29 and the brakes 27 and 30 may be controlled by the control unit 32. The clutches 26, 29 may be of any suitable type and may be a friction clutch or a positive engagement clutch, such as a dog clutch. The brakes 27 and 30 may be of any suitable type and may be a friction or positive engagement brake. The rotational speed of the shaft 28 can be transformed by a PTO transmission 31 arranged between the first motor 7 and the power take-off 6 according to its gear ratio. For example, the first motor 7 may drive the shaft 28 at a constant speed of 2500 revolutions per minute (rpm) being transformed to 1000 rpm by the PTO transmission 31 according to a gear ratio of 2,5.

The clutches 26 and 29 and the brakes 27 and 30 as well as the PTO transmission 31 are arranged outside of the coherent mounting volume 13 and located behind the rear face 16 similar to the first motor 7 and the power take-off 6. Thus, the coherent mounting volume 13 is free of these components and can be used for an installation of different components between the front axle 2 and the rear axle 3 of the agricultural machine 1 such as the energy storage 11.

FIG. 3 shows a schematic representation of a second embodiment of the agricultural machine 1 comprising a hydrostatic-mechanical power split transmission 33 with an input shaft 35. The hydrostatic-mechanical power split transmission 33 is covered by the coherent mounting volume 13 and comprises a planetary gearset 34 with a fixed gear ratio for providing a mechanical branch and a hydrostatic branch of the hydrostatic-mechanical power split transmission 33. The mechanical branch comprises a spur gear 43 with a fixed gear ratio. The hydrostatic branch comprises a hydraulic transmission 39 with a variable ratio. The hydrostatic branch with variable ratio may also be referred to as a variator. The torque transferred via the mechanical and the hydrostatic branch is subsequently summed at a summing shaft 44 upstream of a drive shaft 49. The summing shaft 44 is drivingly coupled to drive shaft 49 by a pair of gears 47 and 48 meshing with each other. Gear 47 is connected with the summing shaft 44. Gear 48 is connected with the drive shaft 49.

The input shaft 35 is connected with the first motor 7 for providing a torque and drivingly coupled to a planet carrier 36 of the planetary gearset 34 for introducing the torque of the first motor 7. The mechanical branch comprising the spur gear 43 is driven by the sun gear 38 the planetary gearset 34. As illustrated in FIG. 3, the sun gear 38 is drivingly coupled to the summing shaft 44 by a pair of gears 45 and 46 meshing with each other. Gear 45 is connected with the sun gear 38. Gear 46 is connected with the summing shaft 44.

The hydraulic transmission 39 of the hydrostatic branch includes a hydraulic pump 41 which is driven by a ring gear 37 of the planetary gearset 34, for example though a pump gear set 40 mechanically connected with the ring gear 37 and the hydraulic pump 41. The hydraulic pump 41 is hydraulically connected with a second motor 42 to drive it. The second motor 42 is a hydraulic motor providing a torque to the summing shaft 44. For low specification transmissions commonly used for low horse power applications, the hydrostatic branch may have only one hydraulic motor, as indicted by the second motor 42. However, for high horse power applications, the hydraulic transmission 39 can comprise an additional hydraulic motor as indicated by the third motor 51. The third motor 51 may be hydraulically connected with the hydraulic pump 41 and mechanically coupled with the summing shaft 44 via a shaft 50 illustrated in broken line in FIG. 3. However, other configurations for incorporating two hydraulic motors 42, 51 and/or two hydraulic pumps are possible.

The hydraulic pump 41 and the second and third motors 42, 51 are variable displacement hydrostatic units. For example, a variable displacement hydrostatic unit may be designed as an axial piston swash plate or bent axis unit in which changing the angle of the swash plate or axis alters the displacement. This angle will be referred to as the operating angle which can be set by an adjustment unit electronically connected to and regulated by the control unit 32. For example, this adjustment unit can be designed as the adjustment unit described in International patent application publication No. WO 2014/096446, published 26 June 2014, by AGCO International GmbH. The control unit 32 is configured to vary the division of power through the mechanical and hydrostatic branches of the hydrostatic-mechanical power split transmission 33 by varying the amount of hydraulic assistance provided by the second (or third) motor 42 (or 51) to propel the agricultural machine 1. The overall gear ratio of the hydrostatic-mechanical power split transmission 33, here referred to as the CVT transmission ratio icvr, is the ratio between the rotational speed of the summing shaft 44 and the rotational speed of the input shaft 35. When power is transmitted through both the mechanical branch and the hydrostatic branch, the CVT transmission ratio i_{CVT} is continuously variable depending on what proportion of the power is transmitted through the hydrostatic branch. The proportion of power transmitted through the hydrostatic branch and hence the CVT transmission ratio i_{CVT} is varied by adjusting the displacements of the hydraulic pump 41 and the second and the optional third motor 42, 51. More details in respect of a hydrostatic-mechanical power split transmission can be found for example in European Patent EP 3 678 892 B1, published 8th June 2022, by AGCO International GmbH.

The pair of gears 47 and 48 provide a gear reduction and enable the drive shaft 49 to be offset relative to the second motor 42 and the optional third motor 51. However, it may not be necessary to offset the drive shaft 49. The pair of gears 47, 48 could be omitted so that the summing shaft 44 forms, or is directly connected with, the drive shaft 49. Optionally, a speed range gear box may be incorporated between the summing shaft 44 and the drive shaft 49.

The drive shaft 49 is connected with the differential 19 to transfer the torque of the gear 48. Hence, the differential 19 is drivably connected with the second motor 42 as well as the with the sun gear 38 of the planetary gearset 34. Analogously to the first embodiment according to FIG. 2, the differential 19 distributes the torque to the wheels 5 and 18 of the rear axle 3. Optionally, the torque of the gear 48 can be transferred to an additional differential integrated in the front axle 2 to distribute the torque to the front wheels 4 and 17 and to provide an all-wheel drive of the agricultural machine 1.

Analogous to the first embodiment of FIG. 2, a torque generated by the first motor 7 can be transferred to the power take-off 6. The input shaft 35 is also part of a PTO transmission 52 arranged between the first motor 7 and the power take-off 6. The PTO transmission 52 is designed as a gearbox comprising two stages having a different gear ratio for transforming the rotational speed of the input shaft 35 to a different rotational speed of the output shaft 53 according to the gear ratio of the corresponding active stage of the PTO transmission 52. The first stage comprises a pair of gears 54, 55, the second stage a pair of gears 56, 57. Gears 54 and 56 are connected with the input shaft 35. Gears 55 and 57 are connected with the output shaft 53. A shift collar 58 can be moved between the gear 55 of the first stage and the gear 57 of the second stage to switch between the first stage and the second stage. When the shift collar 58 is in contact with gear 55, the first stage is active and the speed of the input shaft 35 is transformed according to the first gear ratio. When the shift collar 58 is in contact with the gear 57, the second stage is active and the speed of the input shaft 35 is transformed according to the second gear ratio. Thus, two different rotational speeds of the power take-off 6 may be provided, e. g. 540 rpm and 750 rpm. The transfer of torque from the output shaft 53 to the power take-off 6 can be interrupted by a clutch 29 arranged between the PTO transmission 52 and the power take-off 6. A brake 30 arranged between the PTO transmission 52 and the power take-off 6 can decelerate the rotational speed of the output shaft 53 and hold the output shaft 53 at a specific position. The clutch 29, brake 30 and the shift collar 58 may be controlled by the control unit 32.

The PTO transmission 52, the clutch 29 and the brake 30 are arranged outside of the coherent mounting volume 13 and located behind the rear face 16 similar to the first motor 7 and the power take-off 6. Thus, the coherent mounting volume 13 is free of these components and can be used for an installation of different components between the front axle 2 and the rear axle 3 of the agricultural machine 1 such as the hydrostatic-mechanical power split transmission 33 and the energy storage 11.

FIG. 4 and FIG. 5 show a schematic representation for an extended embodiment of the first or the second embodiment of the agricultural machine 1 comprising additionally the energy storage 11. FIG. 4 shows a top view of the agricultural machine 1 and FIG. 5 shows a sectional view along the cutting line A-A indicated in FIG. 4. Since the first motor 7, the PTO transmission 31, 52 and the power take-off 6 are arranged at the rear face 16 outside the coherent mounting volume 13, the coherent mounting volume 13 provides free space between the front axle 2 and the rear axle 3 for installing the energy storage 11. The coherent mounting volume 13 covers the carrier 9 (at least partly). The energy storage 11 is mounted to the carrier 9 and is also covered by the coherent mounting volume 13. The energy storage 11 is connected with the first motor 7 and optionally with other components to supply energy for these components.

The energy storage 11 comprises a fuel cell 59 and storage tanks 61, 62, 63 and 64 for storing a fluid such as hydrogen. Optionally, the energy storage 11 may comprise additional components such as a rechargeable battery, power electronics, interfaces for high voltage networks such as an inverter, a brake chopper and a high voltage connector control. Other power electronics components may also be encapsulated within the energy storage 11 as required. The energy storage 11 may be connected with the control unit 32 or include a separate controller to regulate the supply of energy to the first motor 7 and to adjust the rotational speed of first motor 7. The fuel cell 59 is connected with the storage tanks 61, 62, 63 and 64 to be supplied by the fluid stored in the storage tanks. The fuel cell 59 can convert the chemical energy of the fluid into electrical energy. Then, the battery is charged by the electrical energy generated by the fuel cell 59 or consumed by any electric consumer. The fuel cell 59, the battery and the electric consumers (e. g. the first motor 7) are electrically connected by wired to transfer the electrical energy to each other.

As can be seen in FIG. 4 and FIG. 5, the carrier 9 comprises of longitudinal extending side frames which are connected via transverse connecting parts to form a lead frame enclosing a hallow space 60. The storage tanks 61, 62, 63 and 64 thereby extend through cut-outs in the side frames of the carrier 9 to install the storage tanks 61 and 62 over the complete width of the agricultural machine 1, while in the vicinity of the rear wheels 5 and 18, the storage tanks 63 and 64 are be reduced in width to enable an installation between the rear wheels 5 and 18.

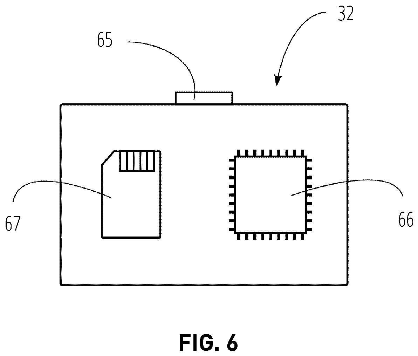

FIG. 6 shows the control unit 32 comprising an interface 65, a controller 66 and a memory 67. The control unit 32 may receive and send signals or data via the interface 65. The interface 65 may be a wireless interface or a connector. The controller 66 may store the data or signals received by the control unit 32 in the memory 67. The memory 67 may contain additional data or executable computer program products, for example in terms of a computer-implemented method, that may be retrieved, processed or executed by the controller 66. Data or signals resulting from the processing of data or signals or from the execution of a computer program product may be stored to the memory 67 or sent to the interface 65 by the controller 66.

All references cited herein are incorporated herein in their entireties. If there is a conflict between definitions herein and in an incorporated reference, the definition herein shall control.

### LISTING OF DRAWING ELEMENTS

| | | | |
|---|---|---|---|
| 1 | agricultural machine | 19 | differential |
| 2 | front axle | 20 | contact point |
| 3 | rear axle | 21 | contact point |
| 4 | wheel | 22 | contact point |
| 5 | wheel | 23 | contact point |
| 6 | power take-off | 24 | line |
| 7 | first motor | 25 | shaft |
| 8 | cabin | 26 | clutch |
| 9 | carrier | 27 | brake |
| 10 | rear side | 28 | shaft |
| 11 | energy storage | 29 | clutch |
| 12 | bonnet | 30 | brake |
| 13 | coherent mounting volume | 31 | PTO transmission |
| 14 | contact point | 32 | control unit |
| 15 | linkage | 33 | transmission |
| 16 | rear face | 34 | planetary gearset |
| 17 | wheel | 35 | input shaft |
| 18 | wheel | 36 | planet carrier |
| 37 | ring gear | 60 | hallow space |
| 38 | sun gear | 61 | storage tank |
| 39 | hydraulic transmission | 62 | storage tank |
| 40 | pump gear set | 63 | storage tank |
| 41 | hydraulic pump | 64 | storage tank |
| 42 | second motor | 65 | interface |
| 43 | spur gear | 66 | controller |
| 44 | summing shaft | 67 | memory |
| 45 | gear | | |
| 46 | gear | | |
| 47 | gear | | |
| 48 | gear | | |
| 49 | drive shaft | | |
| 50 | shaft | | |
| 51 | third motor | | |
| 52 | PTO transmission | | |
| 53 | output shaft | | |
| 54 | gear | | |
| 55 | gear | | |
| 56 | gear | | |
| 57 | gear | | |
| 58 | shift collar | | |
| 59 | fuel cell | | |

## Claims

1. An agricultural machine (1), comprising:
a front axle (2);
a rear axle (3);
a power take-off (6) drivably connected with a first motor (7); and
a coherent mounting volume (13);
wherein
the coherent mounting volume (13) extends axially at least partly between the front axle (2) and the rear axle (3); and wherein
the rear axle (3) comprises a differential (19);
the differential (19) is covered by the coherent mounting volume (13); and
the first motor (7) is located out of the coherent mounting volume (13).

2. The agricultural machine (1) of claim 1, wherein the coherent mounting volume (13) has the shape of a hexahedron.

3. The agricultural machine (1) of claim 2, wherein the hexahedron is a quadrilateral frustum or a rectangular cuboid.

4. The agricultural machine (1) of any one of the preceding claims, wherein the power take-off (6) is located out of the coherent mounting volume (13).

5. The agricultural machine (1) of any one of the preceding claims, comprising left wheels (4, 5);
right wheels (17, 18); wherein
the coherent mounting volume (13) extends laterally to at least one of the left wheels (4, 5) or the right wheels (17, 18).

6. The agricultural machine (1) of any one of the preceding claims, comprising a cabin (8); wherein
the coherent mounting volume (13) extents at least to the cabin (8).

7. The agricultural machine (1) of any one of the preceding claims, wherein
the first motor (7) and the power take-off (6) are located behind the coherent mounting volume (13) at a rear side (10) of the agricultural machine (1).

8. The agricultural machine (1) of any one of the preceding claims, comprising a clutch (26, 29); wherein
the clutch (26, 29) is located out of the coherent mounting volume (13) and configured to interrupt a toque transfer from the first motor (7) to the power take-off (6).

9. The agricultural machine (1) of any one of the preceding claims, wherein
the coherent mounting volume (13) extends at least to the rear axle (3).

10. The agricultural machine (1) of any one of the preceding claims, comprising an energy storage (11); wherein
the energy storage (11) is covered by the coherent mounting volume (13).

11. The agricultural machine (1) of claim 10, comprising
a carrier (9); wherein
the carrier (9) is covered by the coherent mounting volume (13); and
the energy storage (11) is mounted to the carrier (9).

12. The agricultural machine (1) of claim 10 or 11, wherein
the energy storage (11) comprises at least one storage tank (61, 62, 63, 64) for storing a fluid.

13. The agricultural machine (1) of any one of the preceding claims, comprising a transmission (33); wherein
the transmission (33) is covered by the coherent mounting volume (13); and
the transmission (33) is drivably connected with the first motor (7).

14. The agricultural machine (1) of any one of the preceding claims, comprising a PTO transmission (31, 52); wherein
the PTO transmission (31, 52) is out of the coherent mounting volume (13);
the first motor (7) is connected with a shaft (28, 35) of the PTO transmission (31, 52); and
the power take-off (6) is connected with a shaft (53) of the PTO transmission (31, 52).

15. The agricultural machine (1) of any one of the preceding claims, comprising a control unit (32); wherein
the control unit (32) is covered by the coherent mounting volume (13); and
the control unit (32) is connected with the first motor (7).

16. The agricultural machine (1) of any one of the preceding claims, comprising a fuel cell (59); wherein
the fuel cell (59) is covered by the coherent mounting volume (13); and
the fuel cell (59) is connected with the first motor (7).
